# EUROPEAN PATENT APPLICATION

(11) **EP 1 600 493 A2**
(43) Date of publication of application: **30.11.2005**
(21) Application number: 05291049.4
(22) Date of filing: 16.05.2005
(51) Int. Cl.: C10L 11/04

(54) **Packaged wood fuel product with enhanced lighting capability**

(30) Priority: 18.05.2004 US 572542 P
(71) Applicant: Summit Views Llc, 95030 Los Gatos, California (US)
(72) Inventor: Weissman, Gregg D., Watsonville, California 95076 (US); Young, Jennifer J., Los Gatos, California 95033 (US)
(74) Representative: Burbaud, Eric

(57) **Abstract**

A packaged wood fuel product is disclosed which includes a natural fiber fabric bag surrounding a collection of wood fuel. The bag is impregnated with a vegetable oil to encourage ignition and may be provided with a wick extending from the bag to facilitate lighting.

## Description

### Cross-Reference to Related Application

This application claims priority to U.S. Provisional Application Serial No. 60/572,542 filed on May 18, 2004.

### Field of the Disclosure

The present disclosure generally relates to wood fuels, and more particularly relates to packaged wood fuels such as manufactured fire logs.

### Background of the Disclosure

In my prior U.S. patent application publication numbers 2004/0035046 and 2003/0079400, I disclosed a packaged wood fuel product with a natural, plant derived fabric surround as a wrapping for wood fuel. The fabric serves as decorative packaging, but is also combustible without the environmental impact of common paper wrappings used for conventional manufactured fire logs. We experimented with varieties of burlap based wrappings as an alternative to paper wrappings for wood fuels, partly because they are natural, low cost, burnable fabrics. In addition, they are decorative, attractive, and ecologically friendly. Other fabrics can be used as combustible wrappers as well.

While my prior inventions have performed admirably, it would be advantageous to provide a natural burlap fabric as a wood fuel package wrapper which is easier to light for the typical consumer. For example, while large wood safety matches and household lighters can be used to effectively light such packages, smaller flames, such as those derived from typical cardboard matchbook matches are more of a challenge.

As a first step we experimented with the application of wax material to the outside of the bag as an aid to ignition of the bag. We have focused on all-natural ingredients such as soy wax but this is illustrative of the general range of materials available, and should not be taken as restrictive. We tried applying wax in various ways to the bag including allowing the wax to soak into the bag from a mixture of material inside the bag, and applying wax to seams and corners.

We did not at the time feel that there was enough of an improvement in lighting the bag to include the wax as part of the product invention and did not release this type of lighting-assistance to the public. However, we have since realized that the application of various natural materials related to oils and waxes could be advantageous in helping the user light the package. As will be described in further detail herein, we have determined that a wide variety of oils and esters, and related compounds can be used to aid in the lighting of a wood fuel package such as we have described and marketed. Vegetable-based compounds can be especially effective.

The prior art actually contains examples of petrochemical compounds in burlap aiding the lighting of the burlap material. Non-food-grade burlap is treated with petrochemical hydrocarbon compounds well known to practitioners of the art of manufacture of such bags, to control pests and decay of the fabric. This material lights more easily than the petrochemical-free food-grade burlap. However, the bag still has difficultly lighting and the compounds used in typical manufacture have a characteristic and unpleasant order.

What we sought was to discover the oils or related materials that could be added to a burlap or similar wrapper to provide an easier lighting experience for the user when used as a packaging material for wood fuels, providing a convenient and attractive package. Our preference has been to focus on the use of vegetable-derived compounds because of environmental or marketing issues, but the use of these types of compounds should be construed as illustrative of a general method. In devising the most convenient lighting method for the bag, we additionally sought structural changes to the bag that would facilitate lighting as well.

### Summary of the Disclosure

In accordance with one aspect of the disclosure, a packaged wood fuel product is provided which comprises a fabric bag, a collection of wood fuel within the fabric bag, a vegetable oil impregnated into the fabric bag, and a wick extended away from the fabric bag.

In accordance with another aspect of the disclosure, a packaged wood fuel product is disclosed which comprises a fabric bag, a collection of wood fuel within the fabric bag, and a vegetable oil impregnated into the bag.

In accordance with another aspect of the disclosure, a method of making a packaged wood fuel product is disclosed which comprises providing a fabric bag, forming a wick in the fabric bag, applying a vegetable oil to the fabric bag, and filling the fabric bag with a collection of wood fuel.

These and other aspects and features of the disclosure will become more apparent upon reading the following detailed description when taken in conjunction with the accompanying drawings.

### Brief Description of the Drawings

Fig. 1 is a perspective view of a packaged wood fuel product constructed in accordance with the teachings of the disclosure;

Fig. 2 is an enlarged perspective view of section 2 of Fig. 1;

Fig. 3 is a perspective view of an alternative embodiment constructed in accordance with the teachings of the disclosure; and

Fig. 4 is a flow chart of steps which may be taken in a manufacturing a packaged wood fuel product in accordance with the method of the present disclosure.

While the disclosure is susceptible to various modifications and alternative constructions, certain illustrative embodiments thereof have been shown in the drawings and will be described below in detail. It should be understood, however, that there is no intention to limit the disclosure to the specific forms disclosed, but on the contrary, the intention is to cover all modifications, alternative constructions, and equivalents falling within the spirit and scope of the disclosure as defined by the appended claims.

### Detailed Description of the Disclosure

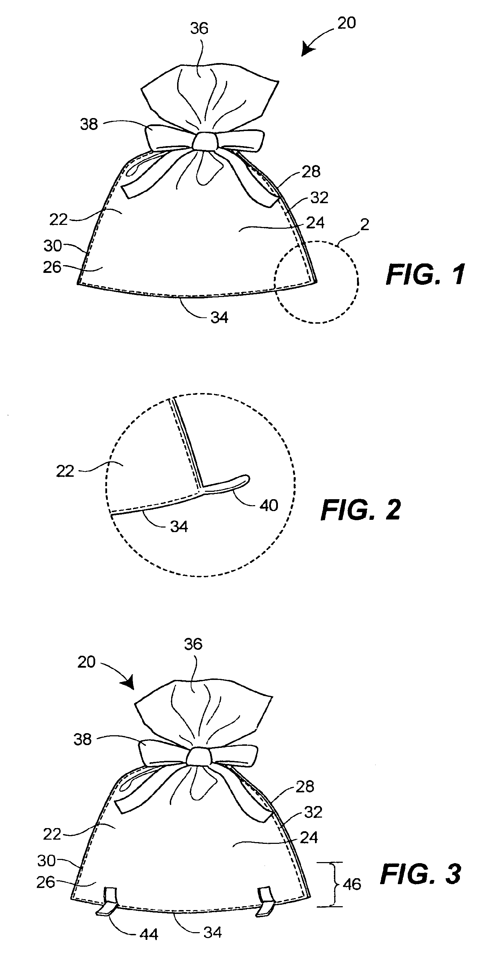

Referring now to the figures and with specific reference to Fig. 1, a packaged wood fuel product constructed in accordance with the teachings of the disclosure is generally referred to by reference numeral 20. While the product 20 is illustrated in the form of a synched or tied bag 22 it is to be understood that wood fuel product 20 could be provided in any number of different forms and that bag 22 is simply illustrative of the general concept and that it is the components of the wood product, and the method of manufacturing same which are of importance. For example, the wood fuel product 20, while not depicted, could also be provided in the form of a conventional manufactured fire log shape, i.e., brick shaped or, geometrically speaking, parallelepiped in shape, or the like.

Referring again to Fig. 1, the wood fuel product 20 includes the aforementioned bag 22 which surrounds a collection of wood fuel products 24 as described in my previous application serial number 10/261,350, the disclosure of which is incorporated by reference herein. More specifically, the bag 22 may include first and second sides 26 and 28 which are sewn along side edges 30 and 32 and bottom edge 34 leaving an open top 36 for loading of wood fuel 24. Once loaded, the open top 36 can be closed with a tie or ribbon 38. Other closure mechanisms are certainly possible including the sewing of the open top 36 shut after the loading of the wood fuel 24, but applicants elect to use tie 38 for decorative and aesthetic purposes.

As stated above, one of the features of the pending application is the ability to ignite a fabric wrapped wood fuel product with greater ease than has heretofore been possible. Accordingly, one mechanism that is provided to facilitate that goal is the provision of a wick 40. In the embodiment of Figs. 1 and 2, wick 40 is provided by extending bottom edge 34 a distance beyond the side edge 30. Such a wick 40 provides a relatively small segment of fabric having a relatively small surface area thus enabling the material to be more easily heated to a point of combustion even using conventional, small sized, cardboard-based match sticks. It is important to note that while the embodiment of Figs. 1 and 2 shows the wick 40 extending from the bottom edge 34, the wick 40 could be similarly provided by downwardly extending from one of the side edges 30 and 32.

In the alternative embodiment of Fig. 3, the wick 40 can be provided by forming a flap in one of the sides 26 and 28. More specifically, it can be seen that a three sided cut or slit 42 can be machined into one of the sides 26 and 28 so as to form a flap 44. In so doing, similar to the wick 40 of Figs. 1 and 2, the flap 44 also serves as a wick in that a relatively small portion of fabric is presented to the user having a relatively small surface area, thus enabling it to be easily raised to a temperature of combustion using conventional matches or the like. It is also important to note that both the wick 40 and flap 44 are preferably provided about a lower zone 46 of the bag 22 such that when combustion is reached, the flame can originally be positioned predominately below the wood fuel 24 of the product 20 thus facilitating overall combustion.

While not visible in the figures, it is also important to note that the bag 22 has been impregnated with a natural or vegetable oil. The vegetable oil can be any number of different natural type vegetable oils including but not limited to linseed oil, castor oil, sesame seed oil, palm oil, hemp oil, coconut oil, olive oil and corn oil. One example would be Ultra-Pure Gold Pressed Castor Oil manufactured by Heritage Products of Virginia Beach, VA. The oil serves to facilitate lighting as well in that it has a lower combustion temperature than the fabric bag. The vegetable oil can also be mixed with a fragrance so as to not only facilitate lighting, but also to release favorable aromatics after combustion. Such fragrances can be provided in any number of forms including, but not limited to, lavender, jasmine, or the like. An example fragrance would be BL-039 Indian Jasmine, manufactured by Al N'dee Al Apache Imports of Beverly Hills, CA.

A developing fuel technology derived from vegetable and animal oils is "bio diesel", which in small amounts can be an effective aid to package lighting. Using this enables an even easier lighting experience, while still using a non-petrochemical compound. However, a petrochemical compound or a mix in various proportions of biodiesel and petro-diesel can be used if desired.

Oils similar to massage or aromatherapy oils can be used to both improve the lighting, and provide an enjoyable aromatic experience for the user also. These oils are scented, using a base oil that is deodorized, and have added to them a natural or synthetic perfume such as lavender or jasmine. This provides an efficient way to enhance the user's experience of the product, similar to a how a potpourri is used for decorative smell. The addition of a perfume, being natural or synthetic, also allows us to cover other smells that may be present in a base oil, or the wrapper. These types of oils can be purchased already scented, or, as in our case, the scent can be added to a separately purchased base oil.

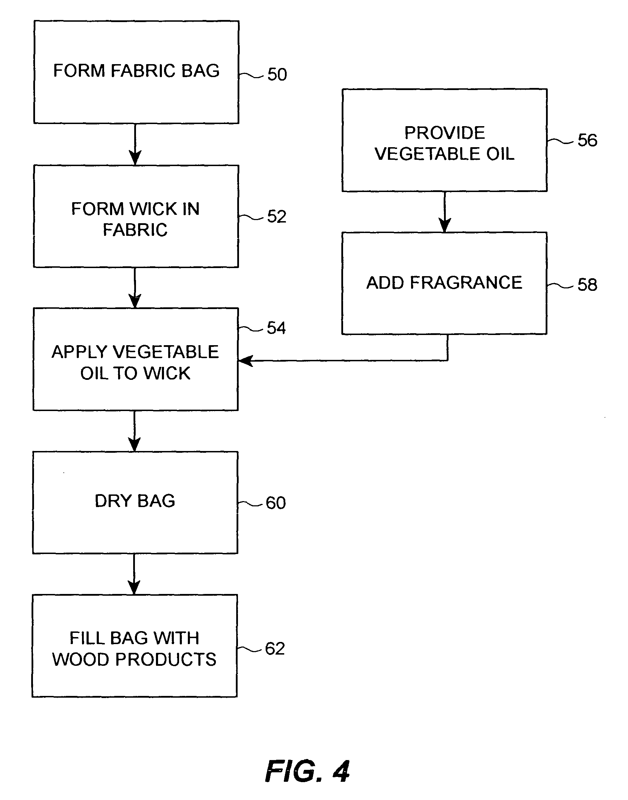

In order to manufacture the wood fuel product 20 in accordance with the teachings of the disclosure, the fabric bag is first formed as shown in a step 50 of Fig. 4. Such a step can be formed by a vendor such that the bag is preformed, or a section of fabric such as burlap can be cut into a suitable dimension and then sewn along three sides to form edges 30, 32, and 34. In conjunction with step 50, the wick 40 can be concurrently formed as shown in step 52. This can be accomplished by cutting a template for the bag 22 with a slight extension proximate the bottom edge 34 such that when edges 30, 32, and 34 are sewn, the wick extends beyond one of the side edges 30, 32, and 34. Alternatively, a relatively small expanse of material can be sewn on the bag 22 after the bag itself is formed.

Once the bag is formed, the vegetable oil 48 is impregnated into the fabric of the bag 22. This is shown in a step 54. However, preceding step 54 are steps 56 and 58 which identify the method by which the vegetable oil is prepared. More specifically, a vegetable oil, such as any one of those mentioned above, is first provided in a suitable container as shown in step 56. Fragrance is then added to the oil 48 and mixed as shown in a step 58. The resulting mixture is then applied to the bag 22. The mixture can be applied in any number of different methods including by way of a sprayer, a brush, or by dipping the bag into the mixture. In addition, it is important to note that the entire bag 22 need not be entirely impregnated with the oil and fragrance mixture, but rather such mixture can be limited only to the lower zone 46 or in fact only to the wick 40.

Once the oil and fragrance mixture is applied, the bag is allowed to air dry as well as disperse through the fabric of the bag 22. This is shown by a step 60 in Fig. 4. Rather than air drying, the bag could be heated by way of an oven or kiln to expedite the drying process, but of course the oven would need to be kept at a relatively low temperature, certainly less then the combustion point of the bag 22.

Finally, once the bag is dried, it can than be filled with wood products such as fire wood, saw dust, twigs, and the like, as shown in Step 62. More specific disclosure with regard to the wood products filling the bag is provided in my aforementioned application, but by way of example, could include sawdust and a binder/accelerant forming an aggregate base atop which are stacked relatively small pieces of wood or kindling, and then relatively large pieces of firewood.

In summary, a fabric wrapper for wood fuel, such the all-natural burlap wrapping we have used, can have the drawback of being difficult to light for some. While we have used wax coatings on the package as an aid to lighting, we have also discovered that deodorized, or perfumed oil compounds, oil esters, or biodiesel are exemplary of an additional type of lighting aid that can be applied to a package, the inventors favoring natural vegetable oils such as mentioned. In addition, enhancements to the package such as a fabric wick incorporated into the package design, or sections of wrapper that can be extended, being attached to the bag, or pulled out, being a cut-out area of the bag made to enable pulling out a tab of material, when incorporated with the oil or similar material as an aid to lighting, makes for an even easier user experience. Additional enhancement is provided by using a perfume additive to the lighting aid, as is common in scented oils, to not only assist in lighting the package but also to create a pleasing package aroma.

## Claims

1. A packaged wood fuel product, comprising:
a fabric bag:
a collection of wood fuel within the fabric bag;
an oil impregnated into the fabric bag; and
a wick extending from the fabric bag.

2. The packaged wood fuel product of claim 1, wherein the fabric bag is manufactured from burlap.

3. The packaged wood fuel product of claim 1, wherein the oil is a vegetable oil selected from the group of oils comprised of linseed oil, castor oil, sesame oil, palm oil, coconut oil, corn oil, hemp oil, and olive oil.

4. The packaged wood fuel product of claim 1, wherein the wick is formed from an extension of a seam of the bag.

5. The packaged wood fuel product of claim 1, wherein the wick is formed from a flap cut out of the fabric bag.

6. The packaged wood fuel product of claim 1, further including a fragrance added to the oil.

7. A packaged wood fuel product, comprising:
a fabric bag;
a collection of wood fuel within the fabric bag; and
a vegetable oil impregnated into the bag.

8. The packaged wood fuel product of claim 7, wherein the fabric bag is manufactured from burlap.

9. The packaged wood fuel product of claim 7, wherein the vegetable oil is selected from the group of natural oils comprised of linseed oil, castor oil, sesame oil, palm oil, coconut oil, corn oil, hemp oil, and olive oil.

10. The packaged wood fuel product of claim 7, further including a wick extending away from the fabric bag.

11. The packaged wood fuel product of claim 10, wherein the wick is formed from an extension of a seam of the bag.

12. The packaged wood fuel product of claim 10, wherein the wick is formed from a flap cut out of the fabric bag.

13. The packaged wood fuel product of claim 7, further including a fragrance added to the vegetable oil.

14. A method of making a packaged wood fuel product, comprising:
providing a fabric bag;
forming a wick in the fabric bag;
applying an oil to the fabric bag; and
filling the fabric bag with a collection of wood fuel.

15. The method of claim 14, wherein the forming step is performed by extending a seam of the bag beyond sides of the bag.

16. The method of claim 14, wherein the forming step is performed by cutting a flap into the fabric bag.

17. The method of claim 14, wherein the oil is applied by spraying.

18. The method of claim 14, wherein the oil is applied by dipping.

19. The method of claim 14, further including the step of adding a fragrance to the oil.

20. The method of claim 14, wherein the oil is applied only to the wick.
